# EUROPEAN PATENT APPLICATION

(11) **EP 4 611 342 A1**
(43) Date of publication of application: **03.09.2025**
(21) Application number: 23881928.8
(22) Date of filing: 26.10.2023
(51) Int. Cl.: H04L 47/10, H04L 47/26, H04L 47/263, H04L 47/25

(54) **METHOD FOR CONTROLLING RATES OF DATA STREAMS, AND INTELLIGENT NETWORK CARD, CLOUD DEVICE AND STORAGE MEDIUM**

(30) Priority: 26.10.2022 CN 202211316696
(71) Applicant: Cloud Intelligence Assets Holding (Singapore) Private Limited, Singapore 189554 (SG)
(72) Inventor: SONG, Enge, Hangzhou, Zhejiang 310030 (CN); LYU, Biao, Hangzhou, Zhejiang 310030 (CN); ZHU, Shunmin, Hangzhou, Zhejiang 310030 (CN); LU, Jianyuan, Hangzhou, Zhejiang 310030 (CN); PAN, Tian, Hangzhou, Zhejiang 310030 (CN)
(74) Representative: Barker Brettell LLP
(86) International application number: PCT/CN2023/126907
(87) International publication number: WO 2024/088353

(57) **Abstract**

Embodiments of the present application provide a method for controlling a rate of a data stream, a smart network interface card, a cloud device and a storage medium, where the method is applied to the smart network interface card, and the method comprises: acquiring a handshake connection message of the first device end, if a state of a congestion control mechanism indicated by the handshake connection message is that the first device end prohibits establishing a congestion control mechanism connection, modifying the handshake connection message; sending the modified handshake connection message to the second device end, so that the second device end sets the congestion control mechanism of the second device end in an enabled state when the state of the congestion control mechanism of the second device end permits establishing the congestion control mechanism connection; where the congestion control mechanism of the second device end is used to reduce a sending rate of the data stream at the protocol stack level when congestion occurs in the data stream. Embodiments of the present application can utilize the congestion control mechanism to ensure the transmission reliability of the data stream and enhance the applicable scenarios. At the same time, the smart network interface card at the source end can further use a Meter table to perform rate limit on the data stream.

## Description

The present application claims priority to Chinese patent application No. 202211316696.X, entitled "METHOD FOR CONTROLLING RATES OF DATA STREAMS, AND SMART NETWORK INTERFACE CARD, CLOUD DEVICE AND STORAGE MEDIUM" and filed with the China National Intellectual Property Administration on October 26, 2022, the content of which is incorporated into this application by reference in its entirety.

### TECHNICAL FIELD

Embodiments of the present application relate to the field of network technology and, in particular, to a method for controlling a rate of a data stream, a smart network interface card, a cloud device and a storage medium.

### BACKGROUND

With the development of cloud computing and virtualization technology, users can rent virtual machines in the cloud, thus deploying users' applications or services in the virtual machines in the cloud. In the cloud network, virtual machines are obtained by virtualization by cloud devices, and there is a need for interconnection between virtual machines located in different cloud devices, so there are a large number of data streams transmitted between different cloud devices in the cloud network. In a transmission process of a data stream, a device that sends the data stream can be referred to as a source end (which would also be referred to as a sending end), and a device that receives the data stream can be referred to as a receiving end.

When the data stream is transmitted in the cloud network, for the data stream, congestion may occur, which will lead to an increase of the delay for a data packet in the data stream arriving at the receiving end and even the loss of the data packet, which seriously affects the transmission reliability of the data stream. Therefore, how to provide a technical solution to ensure the transmission reliability of data streams has become an urgent technical problem to be solved by those skilled in the art.

### SUMMARY

Embodiments of the present application provide a method for controlling a rate of a data stream, a smart network interface card, a cloud device and a storage medium, so as to realize rate limit on data stream of the source end without losing a packet when the data stream sent by the source end is congested, that is, to reduce the rate of the data stream on the premise of not losing the data packet of the data stream at the source end, thereby ensuring the transmission reliability of the data stream. In addition, the scheme provided by the embodiments of the present application has a wide range of applicable scenarios.

In order to achieve the above purpose, the embodiments of the present application provide the following technical scheme.

In a first aspect, embodiments of the present application provide a method for controlling a rate of a data stream, which is applied to a smart network interface card, where the smart network interface card is arranged at a first device end and the method includes: acquiring a handshake connection message of the first device end, where the handshake connection message is used for a handshake connection between the first device end and a second device end, and the handshake connection message indicates a state of a congestion control mechanism of the first device end; if the state of the congestion control mechanism indicated by the handshake connection message is that the first device end prohibits establishing a congestion control mechanism connection, modifying the state of the congestion control mechanism indicated by the handshake connection message to a state that the first device end permits establishing the congestion control mechanism connection to obtain a modified handshake connection message; sending the modified handshake connection message to the second device end, so that the second device end sets the congestion control mechanism of the second device end in an enabled state when the state of the congestion control mechanism of the second device end permits establishing the congestion control mechanism connection; where the congestion control mechanism of the second device end is used to reduce a sending rate of the data stream at the protocol stack level of the second device end when the data stream sent by the second device end is congested in a network.

In a second aspect, embodiments of the present application provide a smart network interface card, where the smart network interface card includes at least one processor and at least one memory, the memory stores one or more computer-executable instructions, and the processor calls the one or more computer-executable instructions to execute the method for controlling the rate of the data stream according to the first aspect.

In a third aspect, embodiments of the present application provide a cloud device, where the cloud device is provided with the smart network interface card according to the second aspect.

In a fourth aspect, embodiments of the present application provide a storage medium, where one or more computer-executable instructions are stored in the storage medium, and when the one or more computer-executable instructions are executed, the method for controlling the rate of the data stream according to the first aspect is realized.

In a fifth aspect, embodiments of the present application provide a computer program, which, when executed, realizes the method for controlling the rate of the data stream according to the first aspect.

The above summary is for the purpose of illustration only and is not intended to be limiting in any way. In addition to the schematic aspects, embodiments and features described above, further aspects, embodiments and features of the present application will be easily understood by referring to the drawings and the following detailed description.

### BRIEF DESCRIPTION OF DRAWINGS

In order to explain the technical scheme in the embodiments of the present application or related technology more clearly, the drawings needed in the description of the embodiments or related technology will be briefly introduced below. Obviously, the drawings in the following description are only embodiments of the present application. For those skilled in the art, other drawings can be obtained according to the provided drawings without creative labor.
FIG. 1 is an example diagram of a data stream transmission system provided by an embodiment of the present application.
FIG. 2 is an example diagram of a message queue.
FIG. 3 is an example diagram of a handshake connection between a client and a server.
FIG. 4 is another example diagram of the data stream transmission system provided by an embodiment of the present application.
FIG. 5 is a flowchart of a method for controlling a rate of a data stream provided by an embodiment of the present application.
FIG. 6 is another flow chart of the method for controlling the rate of the data stream provided by an embodiment of the present application.
FIG. 7 is another flow chart of the method for controlling the rate of the data stream provided by an embodiment of the present application.
FIG. 8 is a block diagram of a smart network interface card provided by an embodiment of the present application.

### DESCRIPTION OF EMBODIMENTS

In the following, the technical scheme in the embodiments of the application will be clearly and completely described with reference to the drawings in the embodiments of the application. Obviously, the described embodiments are only parts of the embodiments of the application, but not the whole embodiments. Based on the embodiments in this application, all other embodiments obtained by those skilled in the art without creative labor belong to the protection scope of this application.

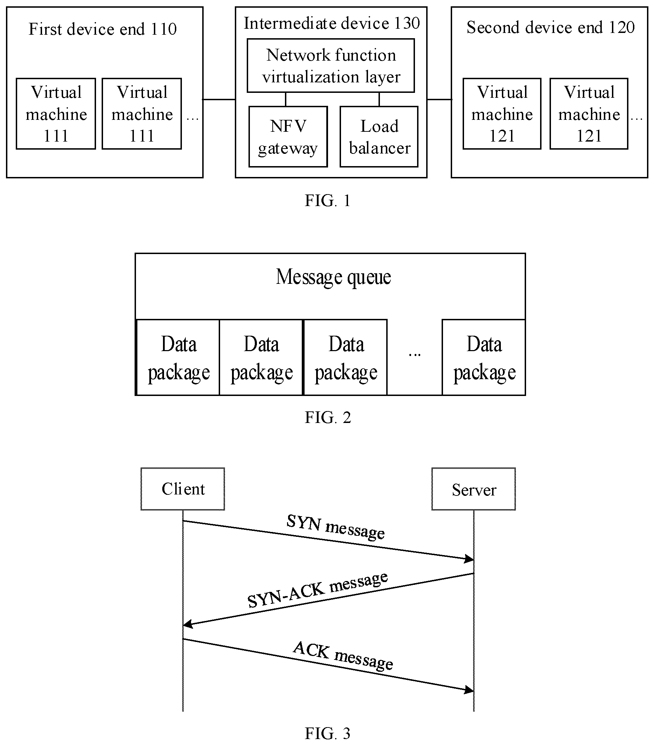

In order to facilitate the understanding of the data stream transmission process of the cloud network, FIG. 1 exemplarily illustrates an example diagram of a data stream transmission system provided by an embodiment of the present application, and the data stream transmission system can be regarded as a simplified system architecture for realizing data stream transmission in the cloud network. As shown in FIG. 1, the data stream transmission architecture can include a first device end 110, a second device end 120 and an intermediate device 130.

The first device end 110 and the second device end 120 may be different cloud-end devices (for example, different server hosts in the cloud end), and in physical form, the first device end 110 and the second device end 120 may belong to different physical devices in the cloud end. Based on virtualization technology, the first device end 110 can virtualize a plurality of virtual machines 111 which are used by the users, and the second device end 120 can virtualize a plurality of virtual machines 121 which are used by the users. The plurality of virtual machines virtualized by the first device end 110 can be provided to the same user or different users for using. The plurality of virtual machines virtualized by the second device end 120 can be provided to the same user or different users for using. Virtual machines used by the same user may involve a virtual machine virtualized by the first device end 110 and a virtual machine virtualized by the second device end 120.

When the virtual machine in the first device end 110 and the virtual machine in the second device end 120 need to be interconnected, the data stream of the virtual machine can be transmitted between the first device end 110 and the second device end 120. One end of the first device end 110 and the second device end 120 that transmits the data stream may be referred to as a source end, and the other end that receives the data stream may be referred to as a receiving end. For example, when a virtual machine in the first device end 110 sends a data stream to a virtual machine in the second device end 120, the first device end 110 can send the data stream of the virtual machine to the virtual machine in the second device end 120. At this time, the first device end 110 is the source end that sends the data stream and the second device end 120 is the receiving end that receives the data stream. For another example, when the virtual machine in the second device end 120 sends a data stream to the virtual machine in the first device end 110, the second device end 120 can send the data stream of the virtual machine to the virtual machine in the first device end 110. At this time, the second device end 120 is the source end for sending the data stream and the first device end 110 is the receiving end for receiving the data stream. It should be noted that the roles of the source end and the receiving end are not fixed, and they need to be determined according to the flow direction of data stream between cloud-end devices.

The intermediate device 130 is a data transmission device in the cloud network that is responsible for transmitting data streams between the source end and the receiving end, and relates to the use of a network function virtualization layer, a virtualized NFV (Network Functions Virtualization, Network Functions Virtualization) gateway, a load balancer, and so on. In one example, data streams can be transferred between different cloud-end devices through the intermediate devices.

Based on that the cloud network can use a message queue for decoupling between a data transmitting and a receiving end, and the intermediary device 130 can set the message queue to perform queuing processing on the data streams transmitted between the source end and the receiving end. For the convenience of understanding, FIG. 2 exemplarily illustrates an example diagram of a message queue. As shown in FIG. 2, the data stream sent by the source end may include a plurality of data packets, and the data packets of the data stream may be queued in the message queue of the intermediate device. The intermediate device can transmit the data packets queued in the message queue, so as to transmit the data packets queued in the message queue to the receiving end, so as to realize the transmission of the data stream between the source end and the receiving end.

The traffic in cloud network is mainly divided into east-west traffic and north-south traffic. Among them, the traffic exchanged between cloud servers in the data center is referred to as east-west traffic (also referred to as horizontal traffic). The traffic exchanged between external users of the data center and cloud servers is referred to as north-south traffic (also referred to as vertical traffic). Cloud-based virtual machines are deployed in cloud-end devices such as server hosts in the cloud-end, so that the data stream between virtual machines in the cloud-end belongs to the east-west traffic of the cloud network. That is to say, the data stream transmitted between the source end and the receiving end in the embodiments of this application belongs to the east-west traffic of the cloud network.

As the cloud network does not limit the rate of the east-west traffic, for the data stream sent by the source end, there is a situation that the traffic is too high, and when traffic of the data stream sent by the source end is too high, when the intermediate device is performing transmitting processing on the data packet of the data stream, the processing rate of the intermediate device may not match the rate at which the source end sends the data stream (for example, the processing rate of the intermediate device is lower than the rate at which the source end sends the data stream), which may lead to an excessively long queue length of the data packet of the data stream in the message queue (that is, the data stream is congested in the network). That is to say, when the traffic of the data stream sent by the source end is too high, the processing rate of the intermediate device to process the data stream will be lower than that the rate at which the source end sends the data stream, so that the data packets newly sent from the source end will continue to increase in the message queue of the intermediate device, resulting in an excessively long queue length in the message queue of the data stream at the source end and the congestion of the data stream in the network.

The queue length of data packets of the data stream in the message queue of the intermediate device is excessively long, which will increases the delay of data packets of the data stream arriving at the receiving end, and even lead to the phenomenon that data packets in the message queue lose. In addition, if the data packets of multiple users' data streams queue in the message queue, and the queue length of data packets of one user's data stream in the message queue is too long, it may also affect the traffic of other users' data streams in the message queue, which violates the principle of tenant isolation on the cloud and leads to the impact on the operation of the cloud network.

In order to avoid the congestion of the data stream of the source end in the network, which may further lead to problems such as an increase in the delay of the data stream arriving at the receiver, the loss of data packets, and the impact on the operation of the cloud network, when the traffic of the data stream sent by the source end is too high, it is necessary to reduce the rate at which the data stream is sent by the source end (for example, limiting the rate at which the data stream is sent by the source end) so that the processing rate of the intermediary device for processing the data packets can match the rate at which the data stream is sent by the source end (for example, the processing rate of the intermediary device for processing the data packets is higher than or equal to the rate at which the data stream is sent by the source end). This mechanism of controlling the rate at which the source end sends the data stream is called source-end back pressure (back pressure). In other words, the source-end back pressure means that the rate at which the intermediate devices in the cloud network process the data stream can't keep up with the rate at which the source end sends the data stream, thus it is necessary to limit the rate at which the source end sends the data stream to ensure the transmission reliability of the data stream.

It should be noted that the traffic transmitted in the cloud network can be mainly divided into the traffic of TCP (Transmission Control Protocol, Transmission Control Protocol) protocol and the traffic of UDP (User Datagram Protocol, User Datagram Protocol) protocol. Among them, UDP protocol provides unreliable services and does not guarantee that traffic can reach the receiving end from the source end. For example, for UDP protocol, when the data stream of UDP protocol losses a packet in the cloud network, UDP protocol does not perceive the packet loss and will not actively reduce the sending rate of the data stream. TCP protocol provides reliable services, and the traffic of TCP protocol will be affected by factors such as packet loss and retransmission, so the congestion control mechanism for traffic is defined in TCP protocol stack to ensure the reliable transmission for the traffic. For example, the TCP protocol stack provides congestion control mechanisms for the traffic such as congestion avoidance, slow start, fast retransmission, etc. For TCP traffic, the data stream will automatically reduce the sending rate due to factors such as packet loss.

When the traffic of the data stream sent by the source end is too large, the data stream sent by the source end can be called a heavy hitte (heavy hitte). For example, a heavy hitte can be considered as a data stream with the number of data packets exceeding a number threshold. The heavy hitte sent by the source end will cause congestion in the message queue of the intermediate device, which will lead to congestion of the heavy hitte sent by the source end in the network. At this time, it is necessary to accurately limit the rate at which the source end sends the data stream. In order to minimize the impact of the rate limit of data stream on the user experience, it is necessary to realize lossless back pressure on the source end (that is, to reduce the rate of the data stream under a condition that there is no data packet loss for the data stream of the source end).

To achieve lossless back pressure for the source end can reduce the rate of the data stream at the protocol stack level of the source end (that is, realizing back pressure on the protocol stack of the source end). As UDP protocol does not define the congestion control mechanism for traffic, while TCP protocol defines the congestion control mechanism for the traffic, implementing back pressure on the protocol stack of the source end is not suitable for the data stream of UDP protocol at present, but suitable for the data stream of TCP protocol. It should be noted that TCP protocol and UDP protocol are only examples of transmission protocols in the cloud network, and there may be other types of transmission protocols in the cloud network. For any transmission protocol, as long as the congestion control mechanism for the traffic is defined in the transmission protocol, the rate of data stream can be reduced at the protocol stack level through the congestion control mechanism of the transmission protocol, so as to realize back pressure on the protocol stack at the source end. TCP protocol is just an example of a transmission protocol that supports congestion control mechanism.

In order to understand the congestion control mechanism defined in transmission protocols such as TCP, in the following, ECN (Explicit Congestion Notification, Explicit Congestion Notification) mechanism is taken as an example for introduction. The ECN mechanism can be regarded as an extension of transmission protocols such as TCP and it is an example of congestion control mechanism, which is used to control a sending rate of data streams under transmission protocols such as TCP. ECN mechanism supports a network congestion notification from the source end to the receiving end. When the data stream is congested in the cloud network, the intermediate device can mark a CE (Congestion experienced, Congestion experienced) field in the data packet of the data stream, so that based on a situation that the CE field in the data packet of the data stream is marked, the source end can reduce the sending rate of the data stream at the TCP protocol stack level to reduce the congestion of the data stream in the cloud network.

Congestion control mechanisms such as ECN need to be used when enabled by the user, that is, when one end of the source end and the receiving end initiates a connection request of the congestion control mechanism, the other end needs to respond to the connection request of the congestion control mechanism, so that the source end can use the congestion control mechanism and realize lossless back pressure at the protocol stack level. For example, when one end of the source end and receiving end initiates an ECN connection request, the other end needs to respond to the ECN connection request, so that the source end can use ECN to realize lossless back pressure at the protocol stack level. Congestion control mechanisms (such as ECN) at source end and receiving end mainly have the following three different states.

A state of not actively initiating the connection request of the congestion control mechanism (for example, not actively initiating the ECN connection request) and not responding to the connection request of the congestion control mechanism (for example, not responding to the ECN connection request) is called a first state for convenience of explanation. When setting the congestion control mechanism state (such as ECN state) with a state value, if the congestion control mechanism state value (such as ECN state value) is set to 0, the congestion control mechanism is in the first state.

A state of actively initiating the connection request of the congestion control mechanism (for example, actively initiating the ECN connection request) and passively responding to the connection request of the congestion control mechanism (for example, passively responding to the ECN connection request) is called a second state for convenience of explanation. When setting the state of the congestion control mechanism with the state value, if the state value of the congestion control mechanism is set to 1, the congestion control mechanism is in the second state.

A default state, which indicates passive response to the connection request of the congestion control mechanism (for example, passive response to ECN connection request). When setting the state of the congestion control mechanism with the state value, if the state value of the congestion control mechanism is set to 2, the congestion control mechanism is in the default state.

In order to understand the state of the congestion control mechanism, the following table illustrates the above three states by taking ECN as an example. As an example, table 1 below exemplarily illustrates example content of the three states of ECN.

**Table 1**

| State value of ECN | State description |
|---|---|
| 0 | Not actively initiating an ECN connection request and not responding to the ECN connection request |
| 1 | Actively initiating the ECN connection request and passively responding to the ECN connection request |
| 2 | Default state, only passively responding to the ECN connection request |

It can be seen that if it is necessary to realize lossless back pressure for the source end at the protocol stack level, the source end and the receiving end need to establish a congestion control mechanism connection (for example, the source end and the receiving end need to establish an ECN connection), and whether the source end and the receiving end can establish a congestion control mechanism connection (for example, an ECN connection) depends on the state of the congestion control mechanism (for example, the ECN state) set by the source end and the receiving end. When the states of the congestion control mechanism set by the source end and the receiving end do not make it impossible for the source end and the receiving end to establish the congestion control mechanism connection (for example, the states of the congestion control mechanism of the source end and the receiving end are both in the default states, and the source end and the receiving end cannot establish the congestion control mechanism connection as the source end and the receiving end both passively respond to the connection request of the congestion control mechanism, and there is no end in the network that initiates the connection request of the congestion control mechanism), the congestion control mechanism cannot be relied on to realize back pressure on protocol stack of the source end. That is to say, when the states of the congestion control mechanism set by the source end and the receiving end can't make the source end and the receiving end establish connection of the congestion control mechanism, the congestion control mechanism of the source end protocol stack cannot be relied on to achieve rate limit with no packet loss on the data stream at the source end protocol stack level (that is, lossless source-end back pressure at the protocol stack level cannot be achieved), which leads to limited application scenarios of source-end back pressure based on the congestion control mechanism.

The rate control scheme for the data stream provided by the embodiments of the present application sets the congestion control mechanism of the device end to an enabled state through a handshake connection process between the device ends. Therefore, when the device end becomes the source end of sending data stream, if the data stream of the device end is congested in the network, the device end can utilize the congestion control mechanism in the enabled state to achieve rate limit with no packet loss on the data stream of the source end at the protocol stack level of the source end. Furthermore, on the premise of not losing the data packets in the data stream of the source end, the congestion control mechanism (such as ECN) can be used to reduce the data stream rate at the protocol stack level of the source end. In addition, the scheme provided by the embodiments of the application can be applied to the situation that another device end which establishes handshake connection with the device end prohibits the establishment of congestion control mechanism connection, so that the application scenario of the scheme provided by the embodiments of the application is enhanced.

In an embodiment, as shown in FIG. 1, taking the first device end and the second device end as examples, the first device end and the second device end can negotiate the states of the congestion control mechanism of the first device end and the second device end through handshake connection. For example, the first device end and the second device end can complete the ECN state negotiation between the first device end and the second device end through the handshake connection of TCP. For convenience of explanation, in the process of handshake connection, one end that initiates the handshake connection between the first device end and the second device end can be called a client (client), and the other end that responds to the handshake connection can be called a server (server). In an example, FIG. 3 exemplarily illustrates an example diagram of a handshake connection between a client and a server, as shown in FIG. 3: as a party initiating a handshake connection, the client can send a SYN (Synchronize Sequence Numbers, Synchronize Sequence Numbers) message to the server to initiate a handshake connection with the server. After receiving the SYN message, the server can respond a SYN-ACK (Acknowledge character, Acknowledge character) message to the client in response to the handshake connection initiated by the client. After receiving the SYN-ACK message, the client can send an ACK message to the server to complete the handshake connection with the server.

During the handshake connection between the client and the server, the client can indicate the ECN state of the client in the SYN message, and the server can indicate the ECN state of the server in the SYN-ACK message, so as to complete the ECN state negotiation between the client and the server.

As an initiator of the handshake connection, if the ECN state of the client is not a state of actively initiating the ECN connection request (for example, the ECN state of the client is the first state or the default state), the ECN state negotiated between the client and the server during the handshake connection cannot make the client and the server establish the ECN connection. Therefore, under a situation of a heavy hitte occurring, the source end that sends the data stream between the client and the server can't utilize the ECN mechanism to reduce the rate of the data stream at the protocol stack level of the source end. At the same time, when the ECN state of the client is in a state of actively initiating ECN connection (for example, the ECN state of the client is in the second state), but the server is in a state of not responding to the ECN connection request (for example, the ECN state of the server is in the first state), the ECN state negotiated between the client and the server during the handshake connection process cannot make the client and the server establish the ECN connection. Therefore, under a situation of a heavy hitte occurring, the source end that sends the data stream between the client and the server can't utilize the ECN mechanism to reduce the rate of the data stream at the protocol stack level of the source end, either.

It should be noted that when the client and the server exchange data, the client can send data streams to the server, at this time, the client is the source end and the server is the receiving end. The server can also send data streams to the client, where the server is the source end and the client is the receiving end. The roles of the source end and the receiving end are not fixed, which depends on the flow direction of the data stream.

To sum up, the situations that the congestion control mechanism cannot be relied on to perform back pressure on the protocol stack at the source end mainly involves the following situations: the state of the congestion control mechanism at the client is the state of not actively initiating the connection request of the congestion control mechanism; for example, the state of the congestion control mechanism at the client is the first state or the default state. Or, the state of the congestion control mechanism at the client is the state of actively initiating the connection request of the congestion control mechanism, but the state of the congestion control mechanism at the server is the state of not responding to the connection request of the congestion control mechanism; for example, the state of the congestion control mechanism at the client is the second state, but the state of the congestion control mechanism at the server is the first state.

It should be noted that in the connection establishment process of congestion control mechanisms such as ECN, the server is in the role of responding to the connection request of the congestion control mechanism, while the client is in the role of initiating the connection request of the congestion control mechanism.

For the convenience of understanding, taking ECN as an example, Table 2 below exemplarily illustrates an ECN state distribution of client and server and the explanation of whether a corresponding ECN mechanism can be realized.

**Table 2**

| ECN state distributions | ECN state value of a client (client) | ECN state value of a server (server) | Whether ECN mechanism can be realized |
|---|---|---|---|
| Case 1 | 1 | 1 or 2 | ECN mechanism can be realized |
| Case 2 | 0 or 2 | 1 or 2 | ECN mechanism cannot be realized |
| Case 3 | 1 | 0 | ECN mechanism cannot be realized |
| Case 4 | 0 or 2 | 0 | ECN mechanism cannot be realized |

As can be seen from Table 2, for case 1, the ECN state value of the client is 1 (corresponding to the client being in the second state and being able to initiate the ECN connection request actively), and the ECN state value of the server is 1 or 2 (corresponding to the server being in the second state or the default state and being able to passively respond to the ECN connection request). At this time, the client and the server can establish the ECN connection with ECN state negotiated through handshake connection. Therefore, under a situation of a heavy hitte occurring, the source end that sends the data stream between the client and the server could utilize the ECN mechanism to realize rate limit on data stream in the source end protocol stack.

For case 2, when the ECN state value of the client is 0 or 2 (corresponding to the client being in the first state or the default state, and the client is not in a state of actively initiating the ECN connection request) and the ECN state value of the server is 1 or 2 (corresponding to the server being in the second state or the default state, and being able to passively respond to the ECN connection request), at this time, as the client does not actively initiate the ECN connection request, therefore, even if the server can passively respond to the ECN connection request, the ECN state negotiated between client and server through handshake connection cannot enable the client and the server to establish the ECN connection. Therefore, under a situation of the heavy hitte occurring, the source end that sends the data stream between the client and the server could not utilize the ECN mechanism to realize rate limit on data stream in the source end protocol stack.

For case 3, when the ECN state value of the client is 1 and the ECN state value of the server is 0 (corresponding to the server being in the first state and not responding to the ECN connection request), at this time, although the client can actively initiate the ECN connection request, the server does not respond to the ECN connection request, thus, the ECN state negotiated between client and server through handshake connection cannot enable the client and the server to establish the ECN connection. Therefore, under a situation of the heavy hitte occurring, the source end that sends the data stream between the client and the server could not utilize the ECN mechanism to realize rate limit on data stream in the source end protocol stack.

For case 4, when the ECN state value of the client is 0 or 2 and the ECN state value of the server is 0, at this time, the client does not initiate the ECN connection request actively and the server does not respond to the ECN connection request, therefore, the ECN state negotiated between the client and the server through the handshake connection cannot enable the client and the server to establish the ECN connection.

As can be seen from the above description, although in the case 2 and the case 3 mentioned above, the negotiated ECN state through a normal handshake connection process between the client and the server cannot enable the client and the server to establish the ECN connection, in case 2 and case 3, one end of the client and the server is permitted to establish ECN connection. For example, in case 2, the server can passively respond to the ECN connection request, and the server is permitted to establish the ECN connection. In case 3, the client can actively initiate an ECN connection request and the client is permitted to establish the ECN connection.

Taking the data stream transmitted between the first device end and the second device end as an example, the embodiments of the application can modify the state of the congestion control mechanism indicated by the handshake connection message of the first device end (the first device end here is the client in case 2 or the server in case 3, for example), so that the modified state of the congestion control mechanism indicates that the first device end permits establishing the congestion control mechanism connection. Therefore, under the condition that the second device end permits establishing the congestion control mechanism connection (the second device end here is the server in case 2 or the client in case 3, for example), the second device end can understand from the modified handshake connection message of the first device end that the first device end expects to establish the congestion control mechanism connection with the second device end. Furthermore, the second device end can set the congestion control mechanism as the enabled state, so that the second device end can respond to all congestion control mechanisms. Subsequently, when the data stream sent by the second device end is congested in the network, the second device end can utilize the congestion control mechanism to reduce the transmission rate of the data stream at the protocol stack level of the second device end based on the congestion control mechanism in the enabled state, so as to realize the rate limit on the data stream at the protocol stack level of the source end.

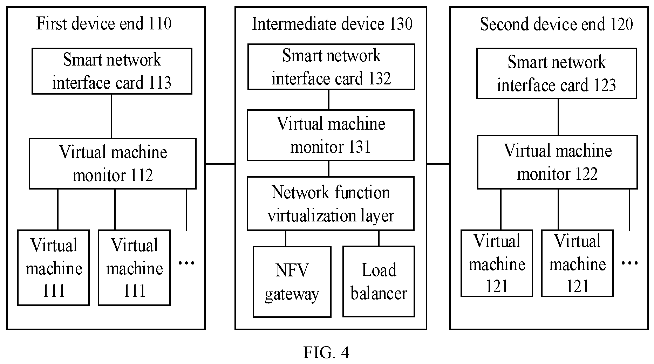

In the process of handshake connection between the first device end and the second device end, the embodiments of the application can use a smart network interface card of the first device end to obtain the handshake connection message of the first device end, and modify the state of the congestion control mechanism indicated by the handshake connection message of the first device end, so that the modified state of the congestion control mechanism indicates that the first device end permits establishing the congestion control mechanism connection. In order to facilitate understanding of the architecture of a data stream transmission system equipped with a smart network interface card, FIG. 4 exemplarily illustrates another example diagram of the data stream transmission system provided by an embodiment of the present application. As illustrated in combination with FIG. 1 and FIG. 4: in addition to virtualizing a plurality of virtual machines 111, a virtual machine monitor 112 and a smart network interface card 113 are also provided in the first device end 110. In addition to virtualizing a plurality of virtual machines 121, the second device end 120 is also provided with a virtual machine monitor 122 and a smart network interface card 123. In addition to virtualizing virtual components such as NFV gateway and load balancer by using the network function virtualization layer, the intermediate device 130 can also be provided with a virtual machine monitor 131 and a smart network interface card 132.

It should be noted that the virtual machine monitor can be used to manage virtual machines and virtual components. Smart network interface card is a hardware device provided for realizing high-performance data forwarding, and the functions originally realized by virtual switch (Virtual switch, Vswitch) can be realized by smart network interface card. The smart network interface card cannot only complete the network transmission function of data, but also improve the application performance and greatly reduce the consumption of the processor in communication through the built-in programmable and configurable hardware acceleration engine. Smart network interface card can be understood as a network card that uses hardware to complete the data forwarding operation of the virtual switch and has on-chip processor.

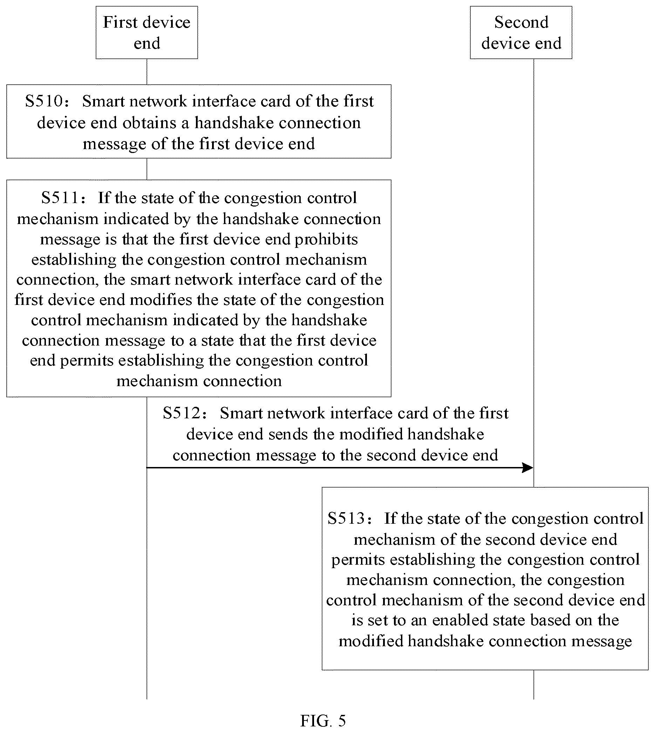

Based on the system architecture illustrated in FIG. 4, in an embodiment, FIG. 5 exemplarily illustrates a flowchart of a method for controlling a rate for a data stream provided by an embodiment of the present application. The steps executed by the first device end in the method flow can be implemented by the smart network interface card provided by the first device end. Referring to FIG. 5, the method flow may include the following steps.

In step S510, the smart network interface card of the first device end obtains the handshake connection message of the first device end. The handshake connection message is used for the handshake connection between the first device end and the second device end, and the handshake connection message indicates the state of the congestion control mechanism of the first device end.

In the process of handshake connection between the first device end and the second device end, the smart network interface card of the first device end can obtain the handshake connection message of the first device end. For example, the smart network interface card of the first device end can hijack the handshake connection message of the first device end. In some embodiments, the first device end may be the client that initiates the handshake connection or the server that responds to the handshake connection.

The handshake connection message of the first device end can indicate the state of the congestion control mechanism of the first device end. In some embodiments, the handshake connection message may carry a state field, and a value of the state field corresponds to the state value of the congestion control mechanism, and different state value of the congestion control mechanism correspond to different states of the congestion control mechanism.

In an embodiment, if the value of the state field carried in the handshake connection message of the first device end indicates that the first device end prohibits establishing the congestion control mechanism connection, the smart network interface card of the first device end can modify the value of the state field carried in the handshake connection message so that the modified value of the state field corresponds to the state that the first device end permits establishing the congestion control mechanism connection. In an embodiment, the state field indicating the state of the congestion control mechanism may be, for example, a CWR (Congestion Window Reduced, Congestion Window Reduced flag) field, an ECE (ECN Echo) field, and the like.

In an embodiment, if the first device end is the client that initiates the handshake connection (correspondingly, the second device end is the server that responds to the handshake connection), the handshake connection message of the first device end can be the SYN message of the client, and the SYN message can indicate whether the client actively initiates the connection request of the congestion control mechanism. For example, the values of CWR field and ECE field in SYN message can indicate whether the client actively initiates the connection request of the congestion control mechanism. In one example, if the values of the CWR field and the ECE field in SYN message are 1, the state of the congestion control mechanism of the client is a state of actively initiating a connection request of the congestion control mechanism (for example, the state value of the congestion control mechanism of the client is 1). If the values of CWR field and the ECE field in SYN message are 0, the state of the congestion control mechanism of the client is a state of not actively initiating the connection request of the congestion control mechanism (for example, the sate value of the congestion control mechanism of the client is 0 or 2).

In an embodiment, if the first device end is a server that responds to the handshake connection (correspondingly, the second device end is a client that initiates the handshake connection), the handshake connection message of the first device end can be a SYN-ACK message of the server. For example, the SYN-ACK message can indicate the state of the congestion control mechanism of the server through the value of the ECE field. In one example, if the state of the congestion control mechanism of the server is a state of not responding to the connection request of the congestion control mechanism (for example, the state value of the congestion control mechanism of the server is 0), the value of the ECE field in the SYN-ACK message is not 1. If the value of ECE field in the SYN-ACK message is 1, the state of the congestion control mechanism of the server can be at least the state of passively responding to the connection request of the congestion control mechanism.

In step S511, if the state of the congestion control mechanism indicated by the handshake connection message is that the first device end prohibits establishing the congestion control mechanism connection, the smart network interface card of the first device end modifies the state of the congestion control mechanism indicated by the handshake connection message to a state that the first device end permits establishing the congestion control mechanism connection, so as to obtain a modified handshake connection message.

In the process of handshake connection between the first device end and the second device end, if the state of the congestion control mechanism of the first device end prohibits establishing the congestion control mechanism connection and is indicated in the handshake connection message of the first device end, in order to enable the second device end to consider that the first device end expects to establish the congestion control mechanism connection through the handshake connection message of the first device end after the second device end obtains the handshake connection message of the first device end, so that the second device end can set the congestion control mechanism at the enabled state under the condition that the second device end itself permits the connection of the congestion control mechanism to be established, the embodiments of the present application can modify the state of the congestion control mechanism indicated by the handshake connection message after the smart network interface card of the first device end hijacks the handshake connection message of the first device end, so that the state of the congestion control mechanism indicated by the modified handshake connection message is that the first device end permits the establishment of the congestion control mechanism connection.

In some embodiments, the smart network interface card of the first device end can modify the values of the state fields (such as the CWR field and the ECE field) carried in the handshake connection message, so that the modified values of the state fields correspond to the state that the first device end permits establishing a congestion control mechanism connection.

In an embodiment, if the first device end is the client that initiates the handshake connection (correspondingly, the second device end is the server that responds to the handshake connection), in a case that the state of the congestion control mechanism indicated in the SYN message is that the client does not actively initiate the connection request of the congestion control mechanism (for example, the state value of the congestion control mechanism of the client is 0 or 2), the smart network interface card of the client can modify the state of the congestion control mechanism indicated in the SYN message to that the client actively initiates the connection request of the congestion control mechanism. In one example, if the values of the CWR field and the ECE field in SYN message are 0, the state of the congestion control mechanism of the client is in a state of not actively initiating the connection request of the congestion control mechanism. Therefore, the smart network interface card of the client can modify the values of the CWR field and the ECE field in SYN message to 1, so as to correspond to the state that the client actively initiates the connection request of the congestion control mechanism.

In an embodiment, if the first device end is a server that responds to the handshake connection (correspondingly, the second device end is a client that initiates the handshake connection), in a case that the state of the congestion control mechanism indicated by the SYN-ACK message is that the server does not respond to the connection request of the congestion control mechanism (for example, the state value of the congestion control mechanism of the server is 0), the smart network interface card of the server can modify the state of the control mechanism indicated by the SYN-ACK message to at least passively respond to the connection request of the congestion control mechanism. In one example, if the state of the congestion control mechanism of the server is not responding to the connection request of the congestion control mechanism, the value of the ECE field in SYN-ACK message is not 1. Therefore, the smart network interface card of the server can modify the value of the ECE field in the SYN-ACK message to 1, so as to correspond to the state that the server passively responds to the connection request of the congestion control mechanism.

In step S512, the smart network interface card of the first device end sends the modified handshake connection message to the second device end.

After modifying the handshake connection message, the smart network interface card at the first device end can send the modified handshake connection message to the second device end.

In an embodiment, if the first device end is a client that initiates handshake connection, the smart network interface card of the client can send the modified SYN message (the values of the CWR field and the ECE field are modified as 1) to the server. In an embodiment, if the first device end is the server that responds to handshake connection, the smart network interface card of the server can send the modified SYN-ACK message (the value of the ECE field is modified as 1) to the client.

In step S513, if the state of the congestion control mechanism of the second device end permits establishing the congestion control mechanism connection, the congestion control mechanism of the second device end is set to be enabled state based on the modified handshake connection message.

After obtaining the above modified handshake connection message, the second device end can consider that the first device end expects to establish a congestion control mechanism connection with the second device end based on the state of the congestion control mechanism indicated by the modified handshake connection message. At this time, if the state of the congestion control mechanism of the second device end permits establishing the congestion control mechanism connection, the second device end can set the state of the congestion control mechanism of the second device end to the enabled state, so that when the data stream sent by the second device end is congested in the network, the second device end can use the congestion control mechanism in the enabled state to limit the rate of the data stream at the protocol stack level of the second device end, so that the second device end can reduce the data stream rate at the protocol stack level on the premise of not losing the data packet of the data stream, and ensure the transmission reliability of the data stream.

In an embodiment, if the first device end is a client and the second device end is a server, the server can consider that the client expects to establish a congestion control mechanism connection with the server based on the modified SYN message of the client (for example, the values of the CWR field and the ECE field in the modified SYN message of the client are 1). At this time, if the state of the congestion control mechanism of the server itself is passively response to the connection request of the congestion control mechanism (for example, the state value of the congestion control mechanism of the server is 1 or 2), the server can set the congestion control mechanism to the enabled state under the situation that the state of the congestion control mechanism of the server itself permits establishing the congestion control mechanism connection, so that the server can use the congestion control mechanism to perform back pressure for the data stream at the protocol stack level.

It should be noted that if the state of the congestion control mechanism of the server itself is not responding to the connection request of the congestion control mechanism (for example, the state value of the congestion control mechanism of the server is 0), although the server can consider that the client expects to establish a congestion control mechanism connection with the server through the modified SYN message of the client, the server itself does not respond to the connection request of the congestion control mechanism, thus, the server cannot enable the congestion control mechanism. That is to say, taking ECN as an example, in the case that the first device end is the client, the embodiments of the present application can modify the value of the state field in the SYN message of the client in the scenario of case 2 of the Table 2, so that the modified SYN message indicates that the client is in the state of actively initiating the ECN connection request, further to enable the server to set the ECN mechanism to the enabled state when the ECN state of the server itself is in the state of passively responding to the ECN connection request.

In an embodiment, if the first device end is a server and the second device end is a client, the client can consider that the server expects to establish a congestion control mechanism connection with the client based on the modified SYN-ACK message of the server (for example, the value of the ECE field in the modified SYN-ACK message of the server is 1). At this time, if the state of the congestion control mechanism of the client itself is to actively initiate a connection request of the congestion control mechanism (for example, the state value of the congestion control mechanism of the client is 1), the client can set the congestion control mechanism to the enabled state under a situation that state of the congestion control mechanism of the client itself is to permit the congestion control mechanism connection, so that the client can use the congestion control mechanism to perform back pressure for the data stream at the protocol stack level.

It should be noted that if the state of the congestion control mechanism of the client itself is not actively initiating a connection request of the congestion control mechanism (for example, the state value of the congestion control mechanism of the client is not 1), although the client can consider that the server expects to establish a congestion control mechanism connection with the client through the modified SYN-ACK message of the server, the client itself does not actively initiate a connection request of the congestion control mechanism, thus, the client cannot enable the congestion control mechanism. That is to say, taking ECN as an example, in the case that the first device end is the server, in the scenario of Case 3 in Table 2, the embodiments of the present application can modify the value of the ECE field in the SYN-ACK message of the server, so that the modified SYN-ACK message indicates that the server is in a state of passively responding to the ECN connection request, and further, when the ECN state of the client itself is in a state of actively initiating the ECN connection request, the client is enabled to set the ECN mechanism to be in an enabled state.

In an embodiment, as an implementation of setting the congestion control mechanism of the second device end in the enabled state, the second device end can transfer a state machine related to the state of the congestion control mechanism in the kernel to the enabled state, so that the second device end can respond to all congestion control mechanisms in the enabled state of the state of the congestion control mechanism. Taking ECN as an example, the second device end can transfer the state machine of ECN state in the kernel to TCP_ECN_OK state (an example of enabled state). In the TCP_ECN_OK state, the second device end can respond to all ECN mechanisms.

The method for controlling the rate of the data stream provided by embodiments of the present application can modify the state of the congestion control mechanism indicated by the handshake connection message of the first device end under the situation that the state of the congestion control mechanism of the first device end prohibits establishing the congestion control mechanism connection, so that the modified handshake connection message indicates that the first device end permits establishing the congestion control mechanism connection. Therefore, under the condition that the second device end itself permits the establishment of a congestion control mechanism connection, the second device end can consider that the first device end expects to establish a congestion control mechanism connection with the second device end through the modified handshake connection message of the first device end. Furthermore, the second device end can set the state of the congestion control mechanism to the enabled state. Subsequently, when the second device end becomes the source end that sends the data stream, if the data stream at the source end is congested in the network, the source end can use the congestion control mechanism in the enabled state to achieve rate limit on the data stream of the source end at the protocol stack level of the source without losing a packet, so as to ensure the transmission reliability of the data stream at the source end. That is to say, the source end can use the congestion control mechanism to reduce the rate of the data stream at the protocol stack level of the source end without losing the data packet of the data stream, so as to ensure the transmission reliability of the data stream.

At the same time, when the state of the congestion control mechanism of the first device end prohibits establishing the congestion control mechanism connection, and the state of the congestion control mechanism of the second device end itself permits establishing the congestion control mechanism connection, the embodiments of the present application can enable the second device end to set the congestion control mechanism to the enabled state by modifying the handshake connection message of the first device end, so that the application scenario of the congestion control mechanism can be enhanced without violating the intention of the second device end to use the congestion control mechanism.

The scheme provided by the embodiments of the present application can modify the handshake connection message of the first device end, so as to set the congestion control mechanism to the enabled state at the second device end that establishes handshake connection with the first device end. Further, when the second device end becomes the source end that sends data and the data stream is congested, the source end can use the congestion control mechanism to achieve rate limit on the data stream at the protocol stack level without losing the packet to ensure the transmission reliability of the data stream. At the same time, by modifying the handshake connection message at the first device end, the embodiments of the present application can set the congestion control mechanism to the enabled state at the second device end without violating the intention of the second device end to use the congestion control mechanism under the condition that the first device end prohibits establishing the congestion control mechanism connection while the second device end permits establishing the congestion control mechanism connection, thereby enhancing the applicable scenario of the congestion control mechanism.

In an embodiment, when the second device end acts as the source end that sends the data stream, if it detects that the data stream is congested in the network, the second device end can use the congestion control mechanism to reduce the transmission rate of the data stream at the protocol stack level. In an embodiment, if the second device end obtains an ACK message with the value in the ECE field being 1 from the first device end, it is regarded as detecting that the data stream sent by the second device is congested in the network. For example, the CE field in the data packet of the data stream sent by the second device end is tagged with a congestion mark by the intermediate device. Then the first device end can set the value of the ECE field in the ACK message sent to the second device to 1 based on the data packet with the tagged CE field after obtaining the data packet with the tagged CE field transmitted by the intermediate device, so that the second device end can detect that the data stream is congested in the network. Furthermore, the second device end can use the congestion control mechanism to slow down the rate of the data stream corresponding to the data packet of which the CE field is tagged at the protocol stack level. For example, the congestion control mechanism is used to reduce the transmission window of the data stream corresponding to the data packet of which the CE field is tagged at the protocol stack level.

In an embodiment, when the second device end acts as the source end that sends the data stream, if the second device end detects that the data stream is congested in the network, the smart network interface card of the second device end can also use a Meter table to limit the rate of the data stream.

In order to facilitate the understanding of the scheme provided by the embodiments of this application, taking ECN as an example, the scheme for controlling the rate of the data stream provided by the embodiments of this application is introduced in combination with several cases illustrated in Table 2 below. As shown in Table 2, in case 1, the ECN state value of the client is 1, and the ECN state value of the server is 1 or 2. This embodiment of the application does not need to modify the handshake connection message between the client and the server.

In case 4, the ECN state value of the client is 0 or 2, and the ECN state value of the server is 0. Although the handshake connection message between the client and the server is modified in this embodiment, the server itself does not respond to the ECN connection request after modifying the handshake connection message of the client. After modifying the handshake connection message of the server, the client itself does not initiate the ECN connection request actively. Therefore, in case 4, the embodiment of the present application modifies the handshake connection message between the client and the server, yet neither of the client nor the server can transfer the state machine related to the ECN state to the enabled state (for example, TCP_ECN_OK state).

In case 2, the ECN state value of the client is 0 or 2, and the ECN state value of the server is 1 or 2. By modifying the handshake connection message of the client, the server can consider that the client expects to establish an ECN connection with the server under the condition that the server itself permits passive response to the ECN connection request, and then the server can transfer the state machine related to the ECN state to the enabled state without violating the intention of the server to use the ECN mechanism of, so that the server can use the ECN mechanism.

In case 3, the ENC state value of the client is 1 and the ENC state value of the server is 0. By modifying the handshake connection message of the server, the client can be enable to consider that the server expects to establish an ECN connection with the client under the condition that the client itself would actively initiate an ECN connection request, and then the client can transfer the state machine related to ECN state to the enabled state without violating the intention of the client to use the ECN mechanism, so that the client can use ECN mechanism.

It should be noted that although the handshake connection message of the client and the handshake connection message of the server are modified in this embodiment of the application, only the SYN message of the client and the SYN-ACK message of the server are modified in this embodiment of the application during the handshake connection process, and only two messages are modified, therefore, the modification overhead of the message in this embodiment of the application is relatively low, and in the scenarios of case 2 and case 3, this embodiment of the application enables the server or the client to activate the ECN mechanism to realize lossless back pressure on the data stream at the protocol stack level. Thus, the embodiments of the application can obtain higher data stream transmission reliability and applicability of the ECN mechanism compared with the lower overhead of modifying the message.

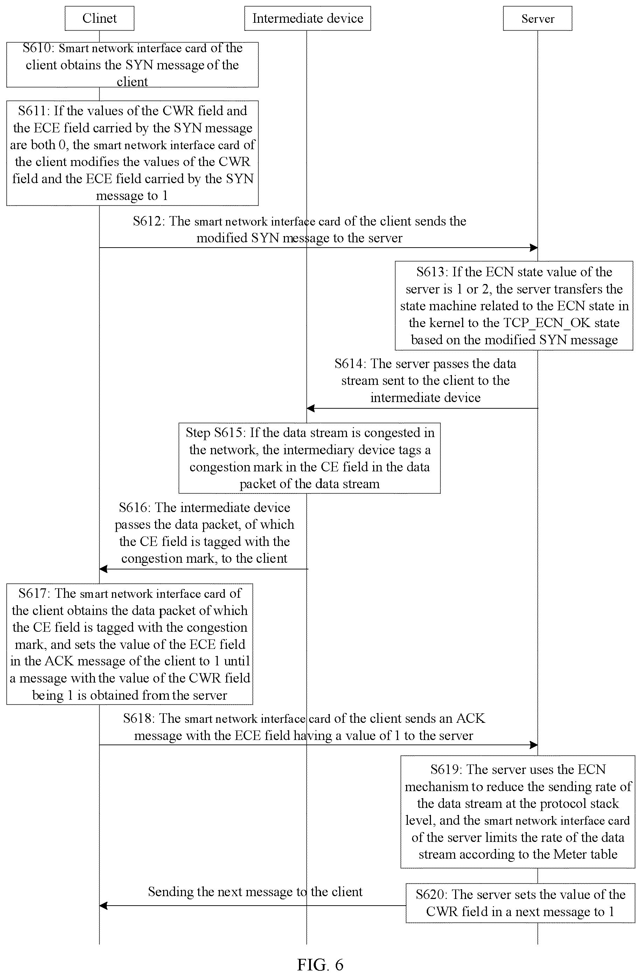

Based on scenario of case 2, in one embodiment, FIG. 6 exemplarily illustrates another flow chart of the method for controlling the rate of the data stream provided by the embodiment of the present application. Referring to FIG. 6, the method flow may include the following steps.

In step S610, the smart network interface card of the client obtains the SYN message of the client, where the SYN message carries a CWR field and an ECE field.

In an embodiment, the SYN message of the client carries a state field indicating the ECN state of the client, the state field may include a CWR field and an ECE field, and the value of the state field can determine the ECN state. For example, the ECN state value of the client is 0 or 2, then the values of the CWR field and the ECE field in the SYN message are both 0. For another example, the ECN state value of the client is 1, then the values of the CWR field and the ECE field in the SYN message are both 1.

In one embodiment, the smart network interface card can analyze FLAG (FLAG) information of the message of the client to determine whether the message of the client is a SYN message.

In step S611, if the values of the CWR field and the ECE field carried by the SYN message are both 0, the smart network interface card of the client modifies the values of the CWR field and the ECE field carried by the SYN message to 1.

When the ECN state of the client is in the second state (the second state is the state of actively initiating the ECN connection request and passively responding to the ECN connection request), the ECN state value is 1, and the values of the corresponding CWR field and ECE field are 1. The ECN state of the client is not the second state, then the ECN state of the client may be the first state (ECN state value is 0) or the default state (ECN state value is 2). In an embodiment, if the values of the CWR field and the ECE field carried by SYN message are 0, it means that the ECN state value of the client is 0 or 2, and the ECN state of the client is not in the second state. At this time, the smart network interface card of the client can modify the values of the CWR field and the ECE field carried by SYN message to 1, so that the value of the modified state field corresponds to the second state of ECN.

In step S612, the smart network interface card of the client sends the modified SYN message to the server.

In step S613, if the ECN state value of the server is 1 or 2, the server transfers the state machine related to the ECN state in the kernel to the TCP_ECN_OK state based on the modified SYN message.

After the server obtains the modified SYN message sent by the smart network interface card of the client, based on the values of the CWR field and the ECE field in the modified SYN message (the value is 1), the server could consider that the client expects to establish ECN connection with the server. Furthermore, the server can transfer the state machine related to the ECN state in the kernel to TCP_ECN_OK state when its ECN state is in the second state (ECN state value is 1) or the default state (ECN state value is 2), that is, the server can at least passively respond to the ECN connection request.

In the TCP_ECN_OK state, the server will respond to all ECN mechanisms, so that when the data stream sent by the server is congested in the network (that is, the data stream sent by the server is heavy hitte), the server can use the ECN mechanism to limit the rate of the data stream at the protocol stack level of the server. That is to say, in a possible implementation, when the ECN state value of the client is 0 or 2 and the state value of the server is 1 or 2 (case 2 in Table 1), the embodiments of the present application can modify the values of the CWR field and the ECE field in the SYN message of the client to 1 (the ECN state value of the corresponding client is 1), so as to enable the ECN mechanism on the server side.

Referring to FIG. 6, in step S614, the server passes the data stream sent to the client to the intermediate device.

In step S615, if the data stream is congested in the network, the intermediary device tags a congestion mark in the CE field in the data packet of the data stream.

If the server becomes the source end that sends the data stream, the server can send the data stream to the client through the intermediary device. The data packets of the data stream will be queued in the message queue of the intermediate device. If the data stream is congested in the network, the intermediate device can tag the congestion mark in the CE field of the data packet of the data stream to indicate that the data stream is congested.

In an embodiment, when the utilization rate of the processor exceeds a utilization rate threshold, the intermediary device can regard the data stream as congested in the network, thus tagging the congestion mark in the CE field of the data packet of the data stream.

In an embodiment, the intermediary device can tag the CE field of the data packet of the data stream as 1, so as to tag the congestion mark in the CE field of the data packet.

In step S616, the intermediate device passes the data packet, of which the CE field is tagged with the congestion mark, to the client.

In step S617, the smart network interface card of the client obtains the data packet of which the CE field is tagged with the congestion mark, and sets the value of the ECE field in the ACK message of the client to 1 until a message with the value of the CWR field being 1 is obtained from the server.

In the case 2, as the client itself does not respond to the ECN mechanism, for the data stream sent to the client, the smart network interface card of the client can obtain the data packet of the data stream (for example, the smart network interface card of the client can hijack the data packet of the data stream sent to the client), so as to simulate the response to the ECN mechanism when the CE field of the data packet is tagged with a congestion mark.

In an implementation of simulating the response to ECN mechanism, the smart network interface card of the client can set the value of the ECE field in the ACK message of the client to 1 to simulate the response of the client to ECN mechanism. The above process of simulating the response to ECN mechanism can be stopped when the smart network interface card of the client obtains the message with the CWR field having a value of 1 sent by the server.

In step S618, the smart network interface card of the client sends an ACK message with the ECE field having a value of 1 to the server.

In step S619, the server uses the ECN mechanism to reduce the sending rate of the data stream at the protocol stack level. And the smart network interface card of the server limits the rate of the data stream according to the Meter table.

In step S620, the server sets the value of the CWR field in a next message to 1, and sends the next message to the client.

The smart network interface card of the client simulates the response to ECN mechanism, and sends the ACK message with the value of ECE field being 1 to the server, then the server can obtain the ACK message with the value of ECE field being 1, so that the server can confirm that the data stream is congested in the network, and then the server can use the ECN mechanism in the enabled state to limit the rate of the data stream at the protocol stack level (that is, reduce the sending rate of the data stream at the protocol stack level). In an embodiment, the server can use the congestion control mechanism to reduce the transmission window of the data stream corresponding to the data packet of which the CE field is tagged at the protocol stack level, so as to limit the rate of the data stream. In the implementation of the embodiments of the present application, in order to prevent the protocol stack from failing to adequately reduce the rate of the data stream, or the server from being unable to successfully set the state machine to the TCP_ECN_OK state, the smart network interface card of the server can also use the Meter table to limit the rate of the data stream. In an embodiment, after the server obtains the ACK message with the ECE field being 1 and limits the rate of the data stream, the server can set the value of the CWR field in the next message to 1 and send it to the client.

In an embodiment, the Meter table can realize the rate limit on data stream by relying on a packet loss mechanism of a token bucket. For example, for a data stream, a limited number of tokens can be given within a period of time. Therefore, every time one data packet of the data stream is sent, one token is consumed. When all of the tokens are consumed, all data packets will be discarded. After a period of time, the number of tokens in the token bucket can be refreshed and the above steps are repeated. In this way, the rate of heavy hitte can be limited, while the rate of small flow is not affected.

There are certain problems in the rate-limiting mode on the data stream in Meter table: first, a large number of consecutive packet losses will occur, which will obviously reduce the user experience. Secondly, the rate-limiting mode that all packets will be discarded after all of the tokens are consumed will make the traffic rate of the data stream show a state of severe jitter from a microscopic point of view, that is, the traffic rate of the data stream is very high for a period of time, and after a period of time, the traffic rate of the data stream returns to zero, and the above steps will be repeated. Although the average rate of data stream is relatively stable when observed from the perspective of a relatively long time window, it shows great deviation in a short time window, which may cause the message queue length of intermediate devices to change greatly.

As a further improvement scheme provided by the embodiments of the present application, rate-limiting of the data stream is implemented at the smart network interface card level at the source end based on the Meter table. That is to say, the embodiments of the present application on the basis of using the congestion control mechanisms such as ECN to limit the rate of the data stream at the protocol stack level of the source end, further uses the Meter table at the smart network interface card level to perform rate limit on the data stream, which can further improve the rate limit effect for the data stream.

For example, in view of the UDP protocol and other transport protocols that do not define the congestion control mechanism, the embodiments of the present application can use the Meter table to limit the rate of UDP heavy hitte at the smart network interface card level at the source end. When the source end cannot successfully set the state machine to the TCP_ECN_OK state, the embodiments of the application can use the Meter table to limit the rate of the data stream at the smart network interface card level at the source end. When the source end successfully sets the state machine to the TCP_ECN_OK state, but the effect of the source end using ECN mechanism to perform rate limit on the data stream at the protocol stack level is not satisfactory, the embodiments of the application can further perform rate limit on the data stream at the smart network interface card level at the source end by using the Meter table. The scheme provided by the embodiments of the present application further utilizes the rate-limiting mode of the Meter table, so that the effect of the back pressure on the source-end data stream in the embodiments of the present application is more accurate.

It should be noted that the specific numerical values of 0, 1 and 2 in the scheme provided by the embodiments of this application are only examples. For example, 0 is only an example of the zeroth preset value, 1 is only an example of the first preset value, and 2 is only an example of the second preset value.

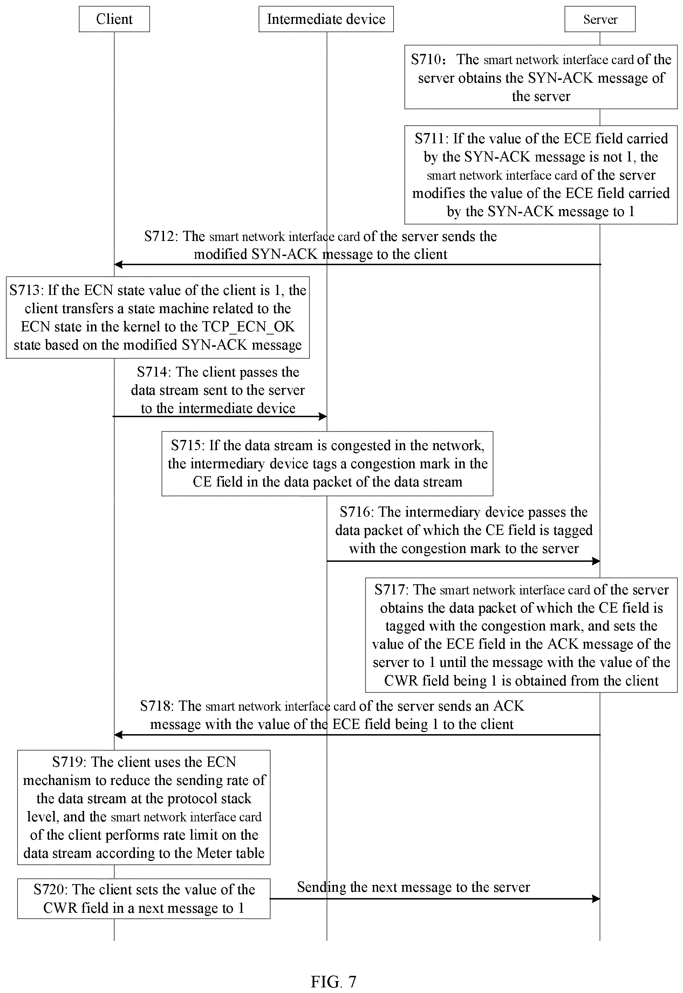

Based on scenario of case 3, in one embodiment, FIG. 7 exemplarily illustrates another flowchart of the method for controlling the rate of the data stream provided by the embodiments of the present application. Referring to FIG. 7, the method flow may include the following steps.

In step S710, the smart network interface card of the server obtains the SYN-ACK message of the server; where the SYN-ACK message carries the ECE field.

In an embodiment, the SYN-ACK message of the server carries a state field indicating the ECN state of the server, the state field may include an ECE field, and the value of the state field can determine the ECN state.

In step S711, if the value of the ECE field carried by the SYN-ACK message is not 1, the smart network interface card of the server would modify the value of the ECE field carried by the SYN-ACK message to 1.

If the ECN state of the server is not responding to the ECN connection request (such as the first state), the ECN state value of the server is 0, and correspondingly, the value of the ECE field carried in the SYN-ACK message of the server is not 1. At this point, the smart network interface card of the server can modify the value of the ECE field carried in the SYN-ACK message to 1.

In step S712, the smart network interface card of the server sends the modified SYN-ACK message to the client.

In step S713, if the ECN state value of the client is 1, the client transfers the state machine related to the ECN state in the kernel to the TCP_ECN_OK state based on the modified SYN-ACK message.

The ECN state value of the client being 1 means that the client can actively initiate ECN connection requests and passively respond to ECN connection requests. Based on the value of the ECE field carried in the modified SYN-ACK message (the value is 1), the client can consider that the server expects to establish an ECN connection with the client. Furthermore, the client can transfer the state machine related to the ECN state in the kernel to the TCP_ECN_OK state when its own ECN state value is 1.

Referring to FIG. 7, in step S714, the client passes the data stream sent to the server to the intermediate device.

In step S715, if the data stream is congested in the network, the intermediary device tags a congestion mark in the CE field of the data packet of the data stream.

In step S716, the intermediary device passes the data packet of which the CE field is tagged with the congestion mark to the server.

In step S717, the smart network interface card of the server obtains the data packet of which the CE field is tagged with the congestion mark, and sets the value of the ECE field in the ACK message of the server to 1 until the message with the value of the CWR field being 1 is obtained from the client.

In step S718, the smart network interface card of the server sends an ACK message with the value of the ECE field being 1 to the client.

In step S719, the client uses the ECN mechanism to reduce the sending rate of the data stream at the protocol stack level; and the smart network interface card of the client performs rate limit on the data stream according to the Meter table.

In step S720, the client sets the value of the CWR field in the next message to 1, and sends a next message to the server.

It can be understood that the principles of the flows shown in FIG. 6 and FIG. 7 are similar. The method flow shown in FIG. 6 is as follows: when the ECN state value of the client is 0 or 2, that is, the establishment of ECN connection is not permitted, and the ECN state value of the server is 1 or 2, that is, the establishment of ECN connection is permitted, under the above situation, the server considers that the client expects to establish ECN connection by modifying the SYN message of the client. Therefore, the server can transfer the state machine of the ECN state to the enabled state, and then when the server acts as the source end of sending the data stream, the ECN mechanism can be used to limit the rate of data stream at the protocol stack level. In an embodiment, when the server serves as the source end, it can also use the Meter table at the smart network interface card level to limit the rate of the data stream.

The method shown in FIG. 7 is as follows: under a situation that the ENC state value of the client is 1, which permits establishing the ECN connection, and the ECN state value of the server is 0, which prohibits establishing the ECN connection, the client considers that the server expects to establish the ECN connection by modifying the SYN-ACK message of the server. Therefore, the client can transfer the state machine of ECN state to the enabled state, and then when the client acts as the source end of sending the data stream, the ECN mechanism can be used to perform rate limit on the data stream at the protocol stack level. In an embodiment, when the client acts as the source end, the Meter table can also be used to limit the rate of the data stream at the smart network interface card level.

The parts with similar principles in the processes shown in FIG. 6 and FIG. 7 can refer to each other and will not be expanded here. It should be noted that although the handshake connection message is modified in this embodiment of the application to enable the protocol stack of the client or the server to consider that the other end of the handshake connection expects to establish the ECN connection, the scheme provided by the embodiments of this application is based on the premise that one end of the client or the server itself permits establishing the ECN connection, and the end that enables the ECN mechanism is also an end that the establishment of the ECN connection is permitted in itself. Thus, the scheme provided by the embodiments of this application does not violate the intention of the device end that permits establishing the ECN connection itself. Taking case 3 as an example, for the case 3, the ECN state value of the client is 1, while the ECN state value of the server is 0. The client itself expects to actively establish an ECN connection, but the server does not expect to establish an ECN connection. At this time, the scheme provided by the embodiments of the application enables the client to consider that the server is in a state of expecting to establish ECN connection by modifying the SYN-ACK message of the server. And further, the embodiments of the application can enable the ECN mechanism at the client that itself wishes to establish ECN connection, so as to perform back pressure on the data stream at the protocol stack level of the client, thus, it does not go against the intention of the client.

The following describes the data stream transmission effect without modifying the handshake connection message, the data stream transmission effect when the smart network interface card at the source end uses the Meter table, and the data stream transmission effect provided by the embodiments of the present application. The embodiments of the application can perform lossless back pressure on the data stream at the protocol stack level of the source end under the condition of modifying the handshake connection message, and use the Meter table to limit the rate of the data stream at the smart network interface card level of the source end.

Without modifying the handshake connection message, only based on the ECN states of the client and the server, the rate limit on the data stream at the protocol stack level is carried out (when the ECN state negotiated by the client and the server can establish ECN connection, the source end sending the data stream between the client and the server can use ECN mechanism to perform rate limit on the data stream at the protocol stack level), then the rate at which the source sends the data stream will be affected by the tagging frequency of the CE field. When the CE field is tagged in a relatively high frequency, the sending rate of the data stream is relatively low. This means that if the tagging frequency of the CE field is not set properly, the intermediate device may not be well protected. In addition, as the ECN mechanism can realize lossless back pressure on the data stream at the protocol stack level, no matter whether the CE field is tagged at a higher or lower frequency, packet loss and retransmission of the data stream are rare. When the smart network interface card at the source end uses the Meter table, the data stream transmission effect is analyzed, and the use of the Meter table will lead to a large number of packet losses and retransmissions.

The scheme provided by the embodiments of this application, combined with the way of modifying handshake connection message and the Meter table technology, can make the rate of data stream not affected by the tagging frequency of the CE field, this is because that the Meter table is used as the backup rate-limiting means for data stream rate-limiting, which solves the problem that the rate-limiting of protocol stack is not satisfactory. When the CE field of the data stream is tagged in a relatively high frequency, the embodiments of the present application can use ECN mechanism to realize lossless back pressure on the data stream at the protocol stack level. When the CE field of the data stream is tagged at a relatively low frequency, the embodiments of the present application can use the Meter table to limit the rate of the data stream.

The embodiments of the present application also provide a smart network interface card, which can be configured to execute the method for controlling the rate of the data stream provided by the embodiments of the application. The smart network interface card can be set in the cloud device, and when the cloud device performs the handshake connection with another cloud device, the method for controlling the rate of the data stream provided by the embodiments of the application is executed. The cloud device provided with the smart network interface card may be the client that initiates the handshake connection or the server that responds to the handshake connection.

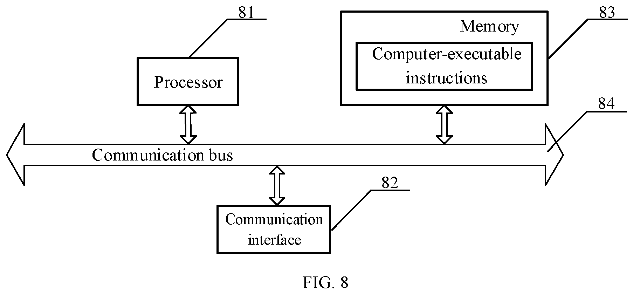

In an embodiment, FIG. 8 exemplarily shows a block diagram of a smart network interface card provided by the embodiments of the present application, which can be regarded as a system structure corresponding to the on-chip processor part in the smart network interface card. As shown in FIG. 8, the smart network interface card can include at least one processor 81, at least one communication interface 82, at least one memory 83 and at least one communication bus 84.

In the embodiments of the present application, the number of the processor 81, the communication interface 82, the memory 83 and the communication bus 84 is at least one, and the processor 81, the communication interface 82 and the memory 83 communicate with each other through the communication bus 84.

In an embodiment, the communication interface 82 may be an interface of a communication module for network communication.

In an embodiment, the processor 81 may be a central processing unit, a GPU (Graphics Processing Unit, Graphics Processing Unit), an NPU (Embedded Neural Network Processor), an FPGA (Field Programmable Gate Array, Field Programmable Gate Array), a TPU (Tensor Processing Unit), an AI chip, an application specific integrated circuit ASIC (Application Specific Integrated Circuit), or one or more integrated circuits configured to implement the embodiments of the present application, etc.

The memory 83 may include a high-speed RAM memory, and may also include a non-volatile memory (non-volatile memory), such as at least one disk memory.

The memory 83 stores one or more computer-executable instructions, and the processor 81 calls the one or more computer-executable instructions to execute the method for controlling the rate of the data stream provided by the embodiments of the present application.

Embodiments of the present application also provide a cloud device, such as a server host in the cloud, which can be provided with a smart network interface card provided by the embodiments of the present application.

Embodiments of the present application also provide a storage medium, which stores one or more computer-executable instructions, and when the one or more computer-executable instructions are executed, the method for controlling the rate of the data stream provided by the embodiments of the application is realized.

Embodiments of the present application also provide a computer program, which, when executed, realizes the method for controlling the rate of the data stream provided by the embodiments of the application.

The above describes a plurality of embodiment schemes provided by the embodiments of the present application, and various optional modes introduced by the embodiment schemes can be combined with each other and cross-referenced without conflict, thus extending to a plurality of possible embodiment schemes, which can all be regarded as the revealed and disclosed embodiment schemes of the embodiments of the present application.

Although the embodiments of the present application are disclosed as above, the present application is not limited thereto. Any person skilled in the art can make various changes and modifications without departing from the spirit and scope of this application, therefore, the scope of protection of this application should be subject to the scope defined by the claims.

## Claims

1. A method for controlling a rate of a data stream, which is applied to a smart network interface card, wherein the smart network interface card is arranged at a first device end and the method comprises:
acquiring a handshake connection message of the first device end, wherein the handshake connection message is used for a handshake connection between the first device end and a second device end, and the handshake connection message indicates a state of a congestion control mechanism of the first device end;
if the state of the congestion control mechanism indicated by the handshake connection message is that the first device end prohibits establishing a congestion control mechanism connection, modifying the state of the congestion control mechanism indicated by the handshake connection message to a state that the first device end permits establishing the congestion control mechanism connection to obtain a modified handshake connection message;
sending the modified handshake connection message to the second device end, so that the second device end sets the congestion control mechanism of the second device end in an enabled state when the state of the congestion control mechanism of the second device end permits establishing the congestion control mechanism connection; wherein, the congestion control mechanism of the second device end is used to reduce a sending rate of the data stream at the protocol stack level of the second device end when the data stream sent by the second device end is congested in a network.

2. The method according to claim 1, wherein, the if the state of the congestion control mechanism indicated by the handshake connection message is that the first device end prohibits establishing the congestion control mechanism connection, the modifying the state of the congestion control mechanism indicated by the handshake connection message to a state that the first device end permits establishing the congestion control mechanism connection to obtain a modified handshake connection message comprises:
if a value of a state field carried by the handshake connection message indicates that the first device end prohibits establishing the congestion control mechanism connection, modifying the value of the state field carried by the handshake connection message so that the modified value of the state field corresponds to a state that the first device end permits establishing the congestion control mechanism connection; among them, the value of the state field corresponds to a state value of the congestion control mechanism, and different state values of the congestion control mechanism correspond to different states of the congestion control mechanism.

3. The method according to claim 2, wherein the first device end is a client initiating the handshake connection, the second device end is a server responding to the handshake connection, and the handshake connection message is a SYN message;
the if the value of the state field carried by the handshake connection message indicates that the first device end prohibits establishing the congestion control mechanism connection, modifying the value of the state field carried by the handshake connection message so that the modified value of the state field corresponds to a state that the first device end permits establishing the congestion control mechanism connection comprises:
if the value of the state field carried by the SYN message indicates that the congestion control mechanism of the client is not in a state of actively initiating a connection request of the congestion control mechanism, modifying the value of the state field carried by the SYN message, so that the modified value of the state field corresponds to a state that the client actively initiates the connection request of the congestion control mechanism.

4. The method according to claim 3, wherein the sending the modified handshake connection message to the second device end, so that the second device end sets the congestion control mechanism of the second device end in an enabled state when the state of the congestion control mechanism of the second device end permits establishing the congestion control mechanism connection comprises:
sending the modified SYN message to the server, so that the server sets the congestion control mechanism of the server in an enabled state when the state of the congestion control mechanism of the server is in a state of passively responding to the connection request of the congestion control mechanism.

5. The method according to claim 4, wherein the congestion control mechanism comprises an ECN, and the state field in the SYN message comprises a CWR field and an ECE field; and
the if the value of the state field carried by the SYN message indicates that the congestion control mechanism of the client is not in the state of actively initiating the connection request of the congestion control mechanism, modifying the value of the state field carried by the SYN message, so that the modified value of the state field corresponds to the state that the client actively initiates the connection request of the congestion control mechanism comprises:
if values of the CWR field and the ECE field carried by the SYN message are both 0, modifying the values of both the CWR field and the ECE field carried by the SYN message to 1;
wherein the values of the CWR field and the ECE field carried by the SYN message both being 0 indicates that the ECN state value of the client is 0 or 2, and the client is in a state of not actively initiating an ECN connection request; the values of the CWR field and the ECE field carried by the SYN message both being 1 indicates that the ECN state value of the client is 1, and the client is in the state of actively initiating an ECN connection request.

6. The method according to claim 5, wherein the sending the modified SYN message to the server, so that the server sets the congestion control mechanism of the server in the enabled state when the state of the congestion control mechanism of the server is in the state of passively responding to the connection request of the congestion control mechanism comprises:
sending the modified SYN message to the server, so that when the ECN state value of the server is 1 or 2, the server transfers a state machine related to the ECN state in a kernel to the enabled state; wherein, if the ECN state value of the server is 1 or 2, the server is in a state of passively responding to the ECN connection request.

7. The method according to any one of claims 3-6, further comprising:
acquiring the data stream sent by the server through an intermediary device, wherein when the data stream is congested in the network, a CE field of a data packet of the data stream is tagged with a congestion mark by the intermediary device;
if a packet tagged with the congestion mark is detected, the value of the ECE field in an ACK message sent to the server is set to 1, so as to inform that the data stream of the server is congested in the network until a message with a value of the CWR field being 1 sent by the server is obtained;
wherein, after the server obtains the ACK message with the ECE field being 1, the server uses the congestion control mechanism to reduce the sending rate of the data stream at the protocol stack level, and the smart network interface card of the server uses a Meter table to limit the rate of the data stream, and the server sets the value of the CWR field in a next message to 1.

8. The method according to claim 2, wherein the first device end is a server responding to the handshake connection, the second device end is a client initiating the handshake connection, and the handshake connection message is a SYN-ACK message;
the if the value of the state field carried by the handshake connection message indicates that the first device end prohibits establishing the congestion control mechanism connection, modifying the value of the state field carried by the handshake connection message so that the modified value of the state field corresponds to the state that the first device end permits establishing the congestion control mechanism connection comprises:
if the value of the state field carried by the SYN-ACK message indicates that the congestion control mechanism of the server is in a state of not responding to a connection request of the congestion control mechanism, modifying the value of the state field carried by the SYN-ACK message, so that the modified value of the state field at least corresponds to the state that the server passively responds to the connection request of the congestion control mechanism.

9. The method according to claim 8, wherein the sending the modified handshake connection message to the second device end, so that the second device end sets the congestion control mechanism of the second device end in an enabled state when the state of the congestion control mechanism of the second device end permits establishing the congestion control mechanism connection comprises:
sending the modified SYN-ACK message to the client, so that the client sets the congestion control mechanism of the client in an enabled state when the state of the congestion control mechanism of the client is in a state of actively initiating the connection request of the congestion control mechanism.

10. The method according to claim 9, wherein the congestion control mechanism comprises an ECN, and the state field in the SYN-ACK message comprises an ECE field;
the if the value of the state field carried by the SYN-ACK message indicates that the congestion control mechanism of the server is in the state of not responding to the connection request of the congestion control mechanism, modifying the value of the state field carried by the SYN-ACK message, so that the modified value of the state field at least corresponds to the state that the server passively responds to the connection request of the congestion control mechanism comprises:
if the value of ECE field carried by SYN-ACK message is not 1, the value of ECE field carried by the SYN-ACK message is modified to 1; wherein the ECN state value of the server is 0, then the value of the ECE field carried in the SYN-ACK message of the server is not 1, and the ECN state value of the server being 0 indicates that the server is in a state of not responding to the ECN connection request;
the sending the modified SYN-ACK message to the client, so that the client sets the congestion control mechanism of the client in the enabled state when the state of the congestion control mechanism of the client is in the state of actively initiating the connection request of the congestion control mechanism comprises:
sending the modified SYN-ACK message to the client, so that when the ECN state value of the client is 1, the client transfers a state machine related to the ECN state in a kernel to the enabled state.

11. The method according to any one of claims 8-10, further comprising:
acquiring the data stream sent by the client through an intermediary device, wherein when the data stream is congested in the network, the CE field of a data packet of the data stream is tagged with a congestion mark by the intermediary device;
if a data packet tagged with the congestion mark is detected, the value of the ECE field in an ACK message sent to the client is set to 1, so as to inform that the data stream of the client is congested in the network until a message with a value of the CWR field being 1 sent by the client is obtained;
wherein, after the client obtains the ACK message with the ECE field being 1, the client uses the congestion control mechanism to reduce the sending rate of the data stream at the protocol stack level, the smart network interface card of the client uses a Meter table to limit the rate of the data stream, and the client sets the value of the CWR field in a next message to 1.

12. A smart network interface card, wherein the smart network interface card comprises at least one processor and at least one memory, the memory stores one or more computer-executable instructions, and the processor calls the one or more computer-executable instructions to execute the method for controlling the rate of the data stream according to any one of claims 1-11.

13. A cloud device, wherein the cloud device is provided with the smart network interface card according to claim 12.

14. A storage medium, wherein one or more computer-executable instructions are stored in the storage medium, and when the one or more computer-executable instructions are executed, the method for controlling the rate of the data stream according to any one of claims 1-11 is realized.
